# EUROPEAN PATENT SPECIFICATION

(11) **EP 3 621 745 B1**
(45) Date of publication and mention of the grant of the patent: **03.01.2024**
(21) Application number: 18834592.0
(22) Date of filing: 16.07.2018
(51) Int. Cl.: B01D 17/02, E03F 7/00

(54) **MULTI-PHASE FLUID SEPARATOR AND THE USE OF SUCH SEPARATOR**
SEPARATOR FÜR MEHRPHASIGE FLUIDE UND VERWENDUNG SOLCH EINES SEPARATORS
SÉPARATEUR DE FLUIDE POLYPHASIQUE ET SON UTILISATION

(30) Priority: 21.07.2017 NO 20171220
(43) Date of publication of application: 18.03.2020
(73) Proprietor: VGS Technology AS, 7300 Orkanger (NO)
(72) Inventor: STRØM, Harold, 7300 Orkanger (NO)
(74) Representative: Curo AS
(86) International application number: PCT/NO2018/050191
(87) International publication number: WO 2019/017795

(56) References cited:
- EP-B1- 2 403 650
- WO-A1-2016/074950
- WO-A1-2016/075018
- WO-A1-2016/075090
- CN-A- 106 824 557
- GB-A- 1 262 961
- US-A1- 2016 168 964
- US-A1- 2017 159 665

## Description

The invention is related to a multi-phase fluid separator, as appears from the preamble of claim 1 and use thereof according to claim 9.

### Background

Multi-phase separators in industry and oil exploitation. There are two main types of separators: horizontal and vertical. The flow in both horizontal and vertical separators is similar for two-phase separators whereby the mixture enters at the side or end of the vessel, the lighter fluid (usually gas) passes out at the top, and the heavier fluid is withdrawn at the bottom.

In a three-phase separator, the fluid is entering at one end of the vessel and the liquids being allowed to settle out at one side of the vessel. The oil layer floats on top of the water layer and spills over a weir into an oil chamber, where it is withdrawn under level control. The water layer remains on one side of the weir and is withdrawn under separate level control.

Problems can, and do, arise with the interface level control between the oil and water layers usually due to an emulsion of oil and water at the interface. This type of problem can normally be overcome by using demulsifying agents, chemicals that break down emulsions, in order to give cleaner separation of the fluids.

However, prior art separators relying upon gravitational separation are voluminous and requires large space to provide the desired separation efficiency. Particularly on offshore locations, the separators also require substantial supporting structures.

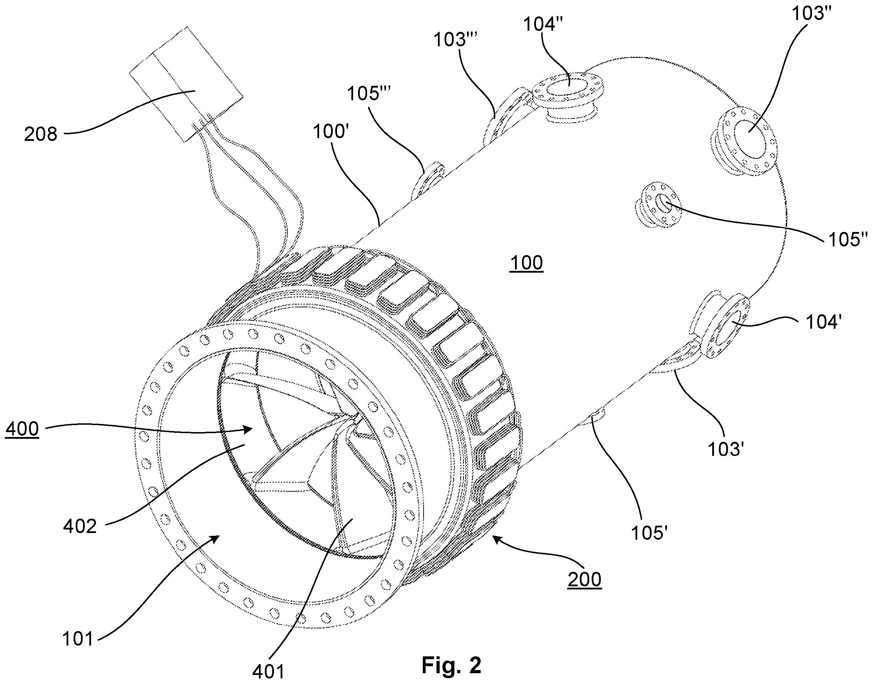

WO 2016/074950 A1 describes a modularized hydrocarbon fluid process line, including a separator comprising a stationary casing 23 provided with electromagnets and stator coils 11. A rotor 22 provided with permanent magnets 6 is arranged within the stationary casing 23. A power and flow module 1 is arranged at the downstream end of the stationary casing 23 and is provided with a gas outlet 17 at the center and a peripheral outlet 13 for the heavier phase. The separator is restricted to separation of two phases only. In order to provide separation of additional phases, two or more separators must be coupled in series in the fluid process line. The embodiment of Fig. 2 exhibits a cylindrical axially extending divider ring 20 which separates the flow paths of the light phase and the heavier phase. This divider ring 20 makes it difficult to obtain a proper degree of separation because the sharp flow path border provided by the divider ring 20 will case some light phase to be entrained in the heavier phase flow, and vice versa.

WO 2016/075090 A1 describes substantially the same as WO 2016/074950 A1, but is directed to a separator with a rotary drum 23 exhibiting an elongate screw 25, arranged on a shaft 27, which rotates the fluid to obtain separate phases within the drum. In one embodiment, the drum 23 is provided with numerous openings or slits 24 to permit transfer of a heavier fluid phase from the drum to an annular space 21 extending along and between the rotary drum 23 and a surrounding stationary casing 22.

In WO2016075018 A1 is described a similar separator as in WO 2016/074950 and WO 2016/074950 with a different scope.

From US2017159665 A1 is known a multistage turbomachine comprising a casing with a fluid inlet and a fluid outlet and a plurality of stages arranged in the casing. A flow path extends from the fluid inlet to the fluid outlet through the sequentially arranged stages. Each stage is comprised of a rotating impeller and an electric motor embedded in the casing and arranged for rotating the impeller at a controlled rotary speed. Each electric motor comprises a motor rotor, arranged on the impeller and integrally rotating therewith, and a motor stator stationarily arranged in the casing.

Another example from the prior art WO 01/06090 A1 which describes a downhole tool and method for controlling fluid flow, such as reinjecting water downhole.

Yet another example from the prior art is DE 10 2009 053660 B3 describes a gas centrifuge having a casing, and a rotor driven by a synchronous motor.

### Object

An object of the present invention is to provide a multi-phase separator with smaller dimensions and less requirement for heavy supporting structures. Another object of the invention is to provide a separator of this type that allows an improved separation control. Yet another object of the invention is to provide a can be operated at high pressures without risk of leakage through prior art shaft seals.

### The invention

These objects are achieved by a separator in accordance with the characterizing part of claim 1 and a use thereof according to claim 9. Additional advantageous features appear from the respective independent claims.

The invention is based on the inventive idea that multi-phase fluid can be separated in a more efficient manner by replacing gravitational based separation by increased gravity forces in the form of acceleration forces by a rotary shaft-less spin-up device in a multiphase separator.

### Summary of invention

The present invention concerns a multi-phase fluid separator that exhibits an elongate housing having a first end and a second end. The housing exhibits a circular cross-section and a longitudinal axis, wherein the housing exhibits a multi-phase fluid inlet at the first end of the housing and numerous fluid outlets downstream of the first end. One or more flow-restricting means are provided inside the housing to guide separated fluids in the housing out of respective fluid outlets, and a light phase outlet.

According to the invention, the separator further exhibits a shaft-less spin-up device arranged rotary inside the housing adjacent to the first end thereof, said shaft-less spin-up device comprising a rotary annular frame provided with numerous radially extending vanes, and numerous permanent north pole magnets distributed along the periphery of the rotary annular frame, and a south pole magnet arranged between each north pole magnet, and wherein numerous magnetic field-producing means, particularly electromagnets consisting of windings of electrically conducting wire, connected to an AC power source, are arranged along the periphery of the housing, attached to a stator frame, also denoted as static frame, located immediately radially outside the rotary annular frame with its permanent magnets.

In one embodiment, the vanes are attached to a closed axis located centrally in the housing, e.g. a center piece, serving as an anchor device for the vanes. In another embodiment, the vanes are solely attached to the rotary annular frame, leaving an aperture between the vane ends located centrally in the rotary annular frame.

Moreover, the shaft-less spin-up device can be supported by bearings where the peripheral part of the rotary frame is supported in any direction by bearings. In an alternative embodiment the bearings of the rotary frame can be lubricated by an external pump.

In yet another embodiment the separator can be provided with an insert pipe connected to the light phase outlet and extending along the longitudinal axis of the separator housing a distance upstream the separator, serving as a weir between light phase, e.g. gas phase, and heavier fluid phase, whereby the flow-restricting means inside housing closest to the light phase outlet can be omitted.

The fluid outlets from the separator can be provided in the form of one or more hollow casings, with or without weir inside the separator housing, arranged extending in the periphery of the housing adjacent to the second (outlet) end of the housing, wherein a peripheral opening is formed in at least a part of the wall of the separator housing, thus establishing flow connection between the internal of the separator housing and the internal of the peripheral casing, and wherein at least one fluid outlet is formed in the outer surface of the peripheral casing.

In order to control the rotational speed of the shaft-less spin-up device as a function of multi-phase composition and flow rate, the separator can be connected to a controller arranged to vary the frequency applied to the electromagnets.

The separator according to the present invention is particularly suitable for separating gas, oil, water and sand from subsea or underground oil-producing wells. However, the separator can also be used for separation of other fluids than multi-phase flow from oil-producing wells, wherein the heavier phase outlet can be omitted or plugged, e.g. for separation of sludge from municipal waste water plants or for separation of oil from water in oil spill. In yet another embodiment, the separator according to the present invention can be used to separate solid material floating in water, e.g. plastic items floating in fresh water or in the sea. In this case, the light-weight solid material is extracted through the light phase outlet of the separator, wherein the insert pipe in the embodiment described below can extend from the light phase outlet and close to the shaft-less spin-up device.

### Definitions

The term "spin-up device" is in this context intended to refer to a device inside the fluid separator that forces the multi-phase fluid to rotate within the circular housing of the separator.

The term "shaft-less" used in connection with the term "spin-up device" defined above, is in this context intended to refer to a spin-up device arranged rotary within the separator housing without being supported by any shaft, sealed with gaskets and supported rotary within the separator housing.

The term "multi-phase" is in this context intended to refer to fluids containing multiple phases, such as fluids selected from the group consisting of gas and liquid; gas, oil and water; gas, oil, water and sand; oil and water; and water and sludge, generally solids from liquids.

### Drawings

The invention is in the following described in further detail with reference to drawings, where
Fig. 1 is a side view of a three-phase separator,
Fig. 2 is a perspective view of the inlet end of the three-phase separator in Fig. 1,
Fig. 3A is a cross-section view along the longitudinal axis of the separator in Figs. 1 and 2,
Fig. 3B is a partial cross-section of part B in Fig. 3A above showing examples of shaft-less spin-up device bearings lubricated by fluid being separated,
Fig. 3C is a partial cross-section of part C in Fig. 3A above showing water/solids and oil outlets,
Fig. 3D is a partial cross-section of part D in Fig. 3A above showing a water outlet,
Fig. 4A is a perspective view of a shaft-less closed spin-up device arranged in a rotary frame with permanent magnets and bearings,
Fig. 4B is a drawing similar to Fig. 4A but with electromagnets arranged in a stationary frame,
Fig. 5 is a drawing similar to Fig. 3B, showing examples of supporting the shaft-less spin-up device with permanent magnets arranged in a rotary frame and externally lubricated bearings,
Fig. 6 is a drawing similar to Fig. 1 but showing a side view of a two-phase separator with an alternative outlet section and external lubrication pump,
Fig. 7 is a cross-section along the longitudinal axis of the separator of Fig. 6a with an insert for the light phase outlet of the separator,
Fig. 7A is a partial cross-section of the slotted outlet from the separator in Fig. 7 for the heaviest fraction, and
Fig. 8 is an end view in perspective of the inlet section of the separator showing a shaft-less spin-up device with open center.

### Detailed description

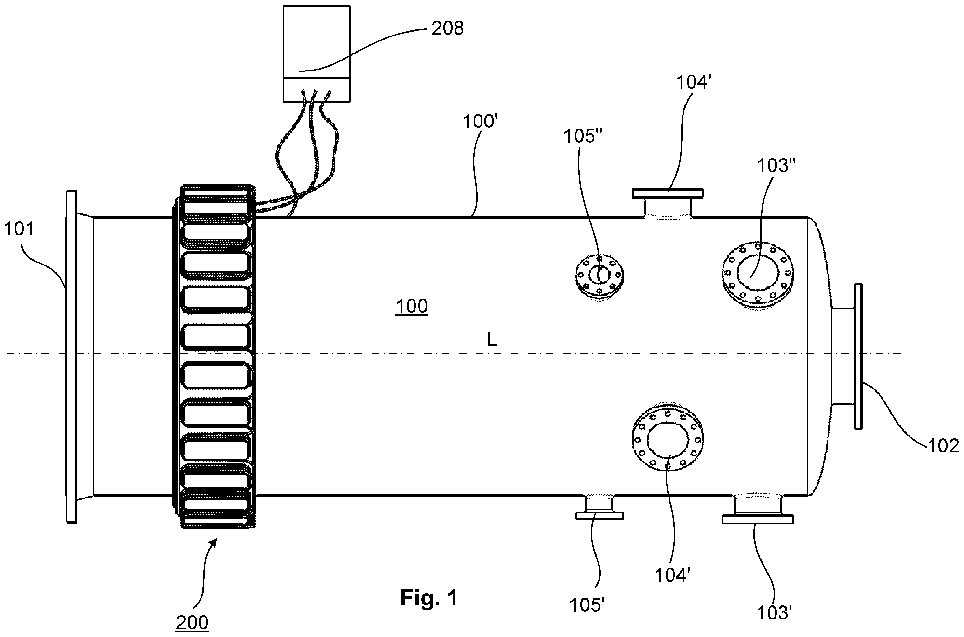

Now with reference to Fig. 1, one embodiment of an elongate three-phase separator is shown in a side view and indicated by reference numeral 100. The separator exhibits an elongate housing 100' with a first end and second end, and with a circular cross-section and a longitudinal axis L. At the first end of housing 100', an inlet 101 is provided for the three-phase fluid to be separated. A light phase outlet 102, e.g. gas outlet, is arranged centrally at the opposite second end of the separator housing 100'. Outlets for the intermediate phase, e.g. oil, is shown at 103' and 103" in the form of numerous pipe joints distributed along the periphery of the separator 100 adjacent to the light phase outlet 102. Further upstream of the intermediate phase outlets 103' and 103", outlets for the heavy phase, e.g. water, is shown at 104' and 104" in the form of numerous pipe joints distributed along the periphery of the separator 100. Further upstream of the heavy phase outlets 104' and 104", outlets 105' and 105" for the heaviest material, e.g. sand and water, in a manner similar to the remaining separated phases. A permanent magnet motor is shown at 200 and is powered by a power source indicated generally at reference numeral 208.

Fig. 2 illustrates the separator 100 of Fig. 1 viewed in perspective towards the inlet end 101. A shaft-less spin-up device indicated generally at reference numeral 400 is arranged rotary within the internal cavity of the separator housing 100'. The shaft-less spin-up device comprises numerous vanes 401 attached to a circular rotary frame 402.

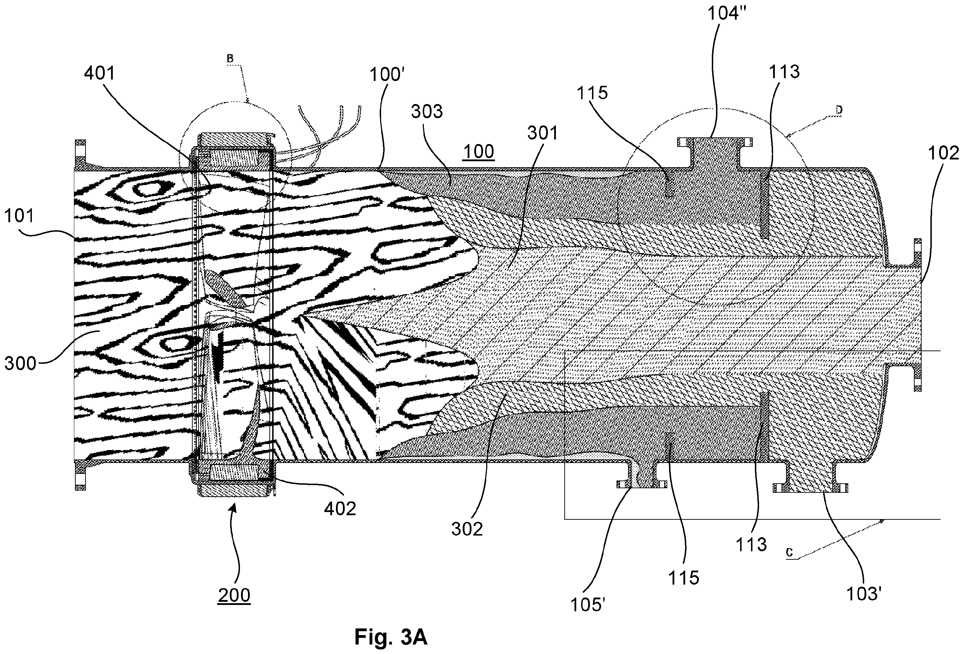

Fig. 3A shows a cross-section along the longitudinal axis of the elongate housing 100' of the separator 100 during a process of separating a flow of multi-phase fluid 300 comprising for example gas, oil, water and sand. The shaft-less spin-up device 400 rotated by a permanent magnet motor 200 brings the multi-phase fluid 300 into rotation under its flow through the vanes 401 of the shaft-less spin-up device 400, whereby separation of the respective phases commences. Further downstream along the longitudinal axis L of the housing 100' of the separator 100, the fluid gradually separates by centrifugal forces into a contaminated heavy phase comprising solids and water, located along the walls of the housing 100', an intermediate phase 302 comprising liquid hydrocarbons flowing closer to the longitudinal axis L of the housing 100', and into a light phase 301, e.g. gas, flowing along the longitudinal axis L of the housing 100'. Contaminated heavy phase (solids and water) is extracted at outlets 105' and 105". A contaminated heavy phase weir 115 prevents solids to flow further downstream and instead leave the separator 100 through solids outlets 105' and 105". Non-contaminated heavy liquid phase 303 is extracted at heavy phase outlets 104' and 104". A heavy phase weir 113 prevents the heavy phase to flow further downstream and instead leave the separator 100 through heavy liquid phase outlets 104' and 104". The intermediate phase 302 flows past the heavy phase weir 113 and is extracted at intermediate phase outlets 103' and 103". The light phase 301 flowing along the longitudinal axis L of the housing 100' of the separator 100 is extracted through light phase outlet 102.

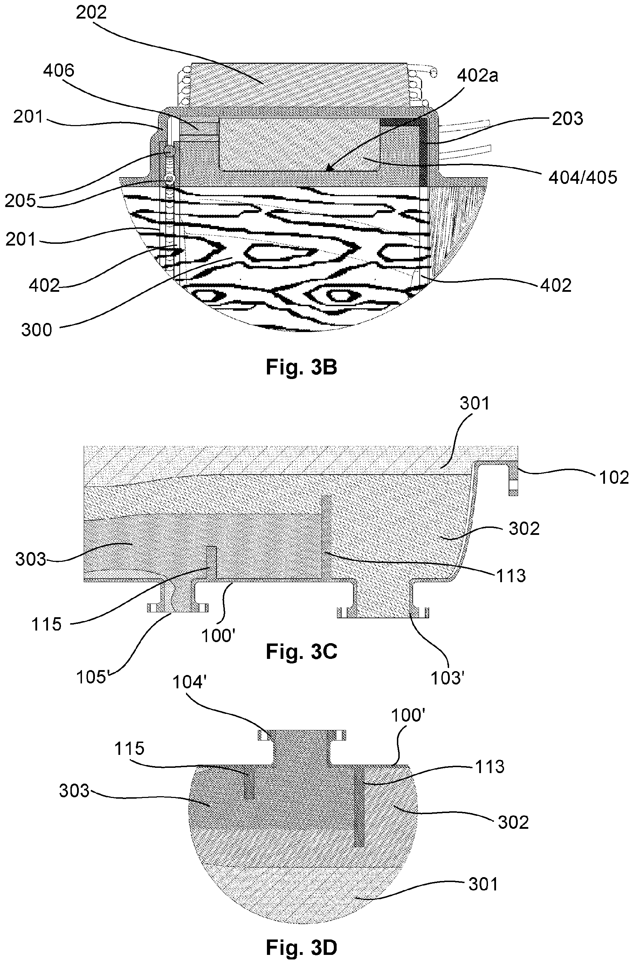

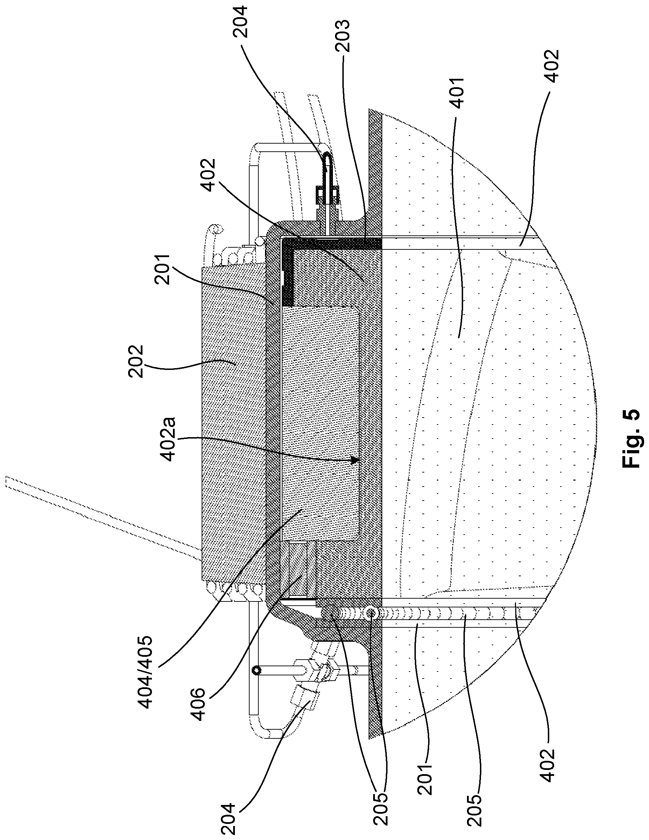

Fig. 3B shows a cut-out of the encircled section B in Fig. 3A with a schematic presentation of the permanent magnet which brings the shaft-less spin-up device 400 to rotate. In this embodiment, the rotary frame 402 is provided with bearings lubricated by the multi-phase fluid. The left hand side of the drawing illustrates an axial roller bearing 406 arranged between the periphery of rotary frame 402 and separator housing 100', and a ball bearing 205 arranged between the rims of rotary frame 402 and separator housing 100'. The right hand side of the drawing illustrates an alternative embodiment, wherein a hydrodynamic bearing 203 is lubricated by the multi-phase fluid itself. The circular shaft-less spin-up device 400 is at its periphery provided with a recess 402a in the rotary frame 402 which accommodates numerous permanent magnets 404/405 with north and south pole magnets attached in an alternating manner in the recess 402a. An iron core electromagnet is indicated at 202 (in the cross-section only one is shown) attached to the housing 100' of the separator 100. In this embodiment, the shaft-less spin-up device 400 with the rotary frame 402 is not provided with any external supply of lubrication. Further details are described below with reference to Fig. 5.

Fig. 3C shows a cut-out of the encircled section C in Fig. 3A with the contaminated heavy phase (solids and water) outlet 105', contaminated heavy phase weir 115, non-contaminated heavy phase weir 113, intermediate phase outlet 103' and light phase outlet 102.

Similarly, Fig. 3D shows a cut-out of the encircled section D in Fig. 3A with the non-contaminated heavy phase outlet 104', contaminated heavy phase weir 115 and non-contaminated heavy phase weir 113. The respective phases are indicated at heavy phase 303, intermediate phase 302 and light phase 301.

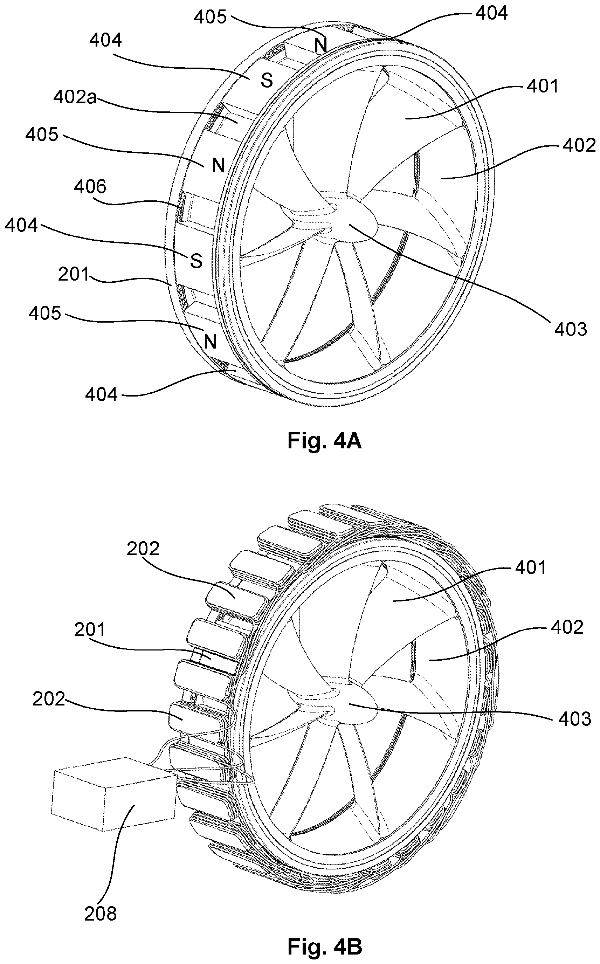

In Fig. 4A, numerous south pole magnets 404 are mounted in the recess 402a in the circular rotary frame 402. Between each south pole magnet 404, a north pole magnet 405 is mounted in the recess 402a. Static frame (which advantageously constitutes a part of the separator housing) 201 is arranged enclosing the rotary shaft-less spin-up device 400 and its rotary frame 402. A roller bearing 406 allows the shaft-less spin-up device 400 to rotate with respect to the static frame 201.

In Fig. 4B, numerous stationary iron core electromagnets 202 are attached to the static frame 201 and connected to an AC power source 208. In use, the alternating current from power source 208 changes the magnetic pole of the electromagnets 202 correspondingly, i.e. the rotational speed of the shaft-less spin-up device 400 is synchronous with the frequency of the AC power source 208. Hence, the shaft-less spin-up device 400 can be brought to rotate from a parked position to a desired rpm in a controlled manner by controlling the frequency of the power source 208. The controlled power supply also enables thorough control of the fluid separator to adapt the rotational speed of the shaft-less spin-up device to varying loads and multi-phase compositions.

Moreover, in this embodiment the vanes 401 are in one end interconnected by a closed center piece 403, whereas the opposite end of the vanes 401 are attached to rotary frame 402.

Fig. 5 shows further details of an alternative embodiment of the permanent magnet motor with electromagnets 202 attached to the separator housing 100'. Rotary frame 402 is supported in bearings, here illustrated in two alternative embodiments. To the left hand side of the drawing, rotary frame 402 is supported in ball thrust bearings 205 lubricated by external lubricant supply 204, e.g. water and/or oil, from a pump 209. The peripheral part of rotary frame 402 is supported by axial roller bearings 406. An alternative bearing is shown to the right hand side of the drawing. There, a hydrostatic bearing 203, located in a cavity, is arranged between rotary frame 402 and separator housing 100', filled with lubricant supplied with lubricant in line 204.

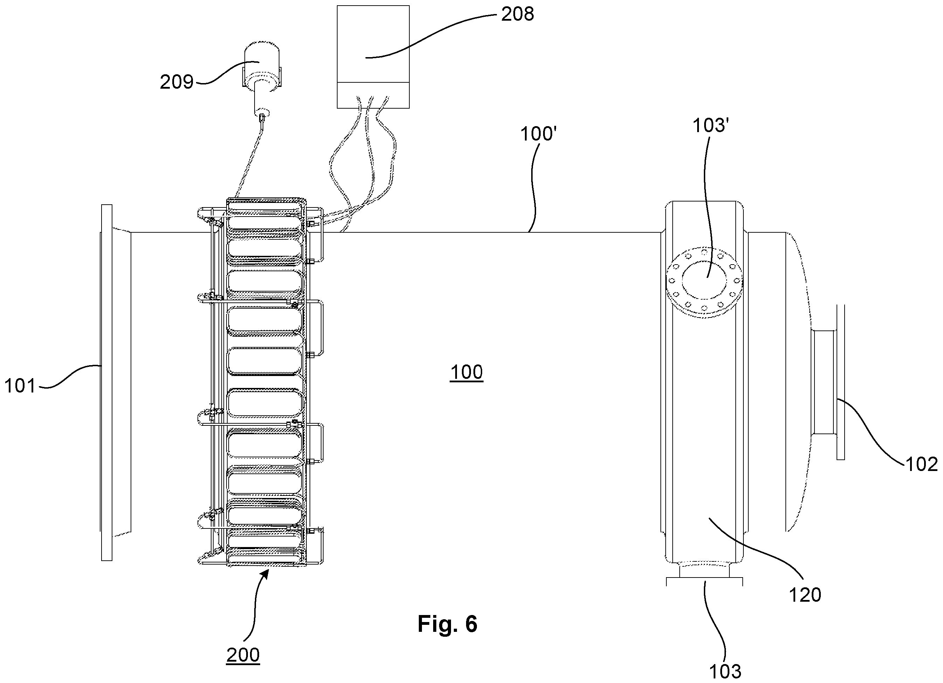

Fig. 6 shows a two-phase separator with an alternative arrangement of the separated phase outlets. In this embodiment, the external surface of housing 100' of the separator 100 is formed with a casing 120 at the downstream (second) end of the separator housing 100'. The casing 120 extends around the circumference of the housing 100'. An opening 121 is formed in the wall of the separator housing 100' along at least a part of the periphery of the housing 100', thus establishing flow connection between the internal of the separator and the internal of the peripheral casing 120. Numerous outlets 103 are formed in the outer surface of the peripheral casing 120. Similar to the separator shown in Figs. 1-3, a weir (not shown) is arranged immediately downstream of the peripheral casing 120. Accordingly, the weir, the peripheral casing with its peripheral opening 121, and the outlet 103 together form an outlet for the heavy phase, whereas the light phase is extracted through outlet 102.

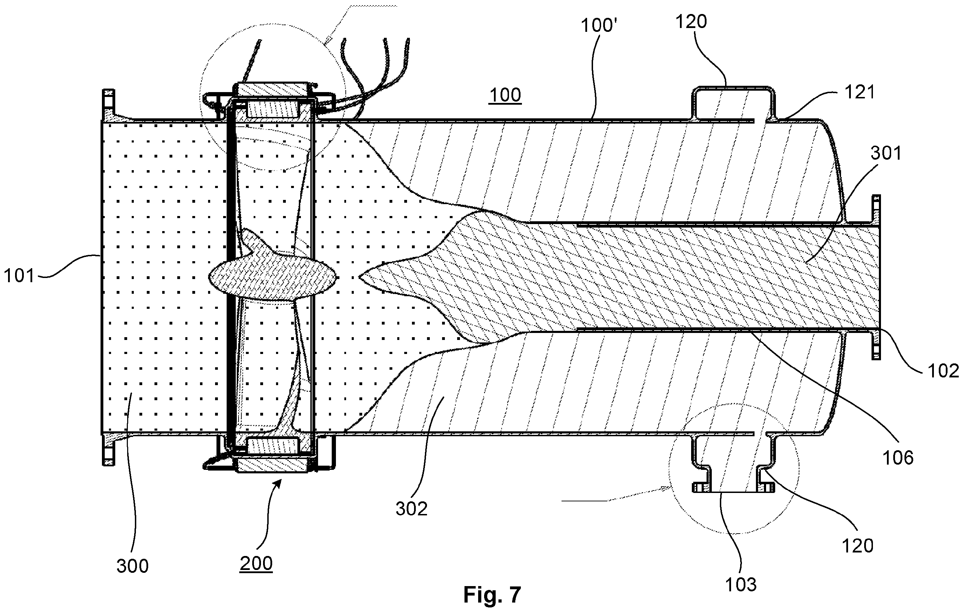

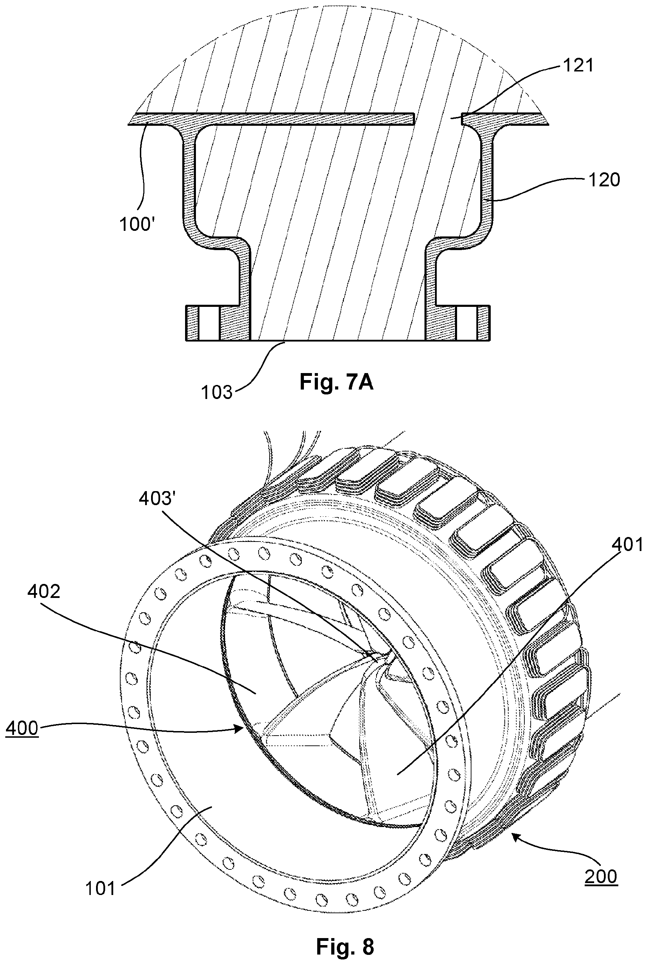

Fig. 7 shows another embodiment of the two phase separator of Fig. 6, where an insert pipe 106 is connected to the light phase outlet 102 and extending a distance upstream inside the housing 100' of the separator 100. The insert pipe 106 assists in the separation by preventing heavy phase liquid to exit the light phase outlet 102. Accordingly, the insert pipe 106 replaces the weir embodiment. The peripheral casing 120 with outlet 103 and peripheral opening 121 are shown in further detail in Fig. 7A.

Fig. 8 shows the inlet section 101 of the separator 100 with an alternative arrangement of the vanes. Here, the closed center piece 403 is replaced by a central bore 403'. This embodiment is advantageous where the multi-phase fluid to be separated contains larger light weight objects, e.g. ropes entrained with the fluid. Here, large and various objects will flow along the center of the separator, through the central bore 403' and further downstream of the separator.

### Technical effect

The present invention has several advantages compared to the prior art. Firstly, the present invention allows for more compact separator structures. For example, on an installation offshore, the reduced space and weight requirement allows more equipment to be installed, or on the other hand allow use of less voluminous and heavy supporting structures than can affect (increase) the life time of existing platforms construction and reduced size of new platforms.

Moreover, the synchronous operation of the shaft-less spin-up device with permanent magnet motor enables convenient control of speed to adapt to the variations of parameters in the multi-phase flow to be separated.

The construction is, thanks to the axle-free arrangement of the shaft-less spin-up device, not sensitive to pressure. There is no mechanical connection between the shaft-less spin-up device 400 and the separator housing 100'. Accordingly, there are no shaft gaskets or seals that otherwise would be subject to leakage, pressure restriction and need for maintenance.

The separator can also be used for separation of other medium than multi-phase flow from oil-producing wells, e.g. sludge from municipal waste water plants. As a result, the plants are able to handle flow peaks that supersede the capacity of the plant.

Moreover, the strong centrifugal field in the fluid being separated is assumed to contribute to strong coalescence of drops, including break-up of emulsions. This mechanism will result in even better separation.

### Modifications

Whereas the present invention has been described and illustrated by a horizontal fluid separator, the present invention is applicable also to an inclined or a vertically oriented separator housing, because gravity force is negligible compared to the centrifugal forces applied to the multi-phase fluid during separation.

Moreover, the invention has been described with two- and three-phase fluids as examples of fluids. However, the separator according to the invention can be adapted to numerous fluids with varying densities.

## Claims

1. Multi-phase fluid separator (100) exhibits an elongate housing (100') having a first end and a second end, and with a circular cross-section and a longitudinal axis (L), wherein the housing (100') exhibits a multi-phase fluid inlet (101) at the first end of the housing (100'), numerous fluid outlets (103', 103", 104', 104", 105', 105") downstream of the first end, a light phase outlet (102) in center, and at least one flow-restricting means (113, 115) arranged inside the housing (100') for guiding separated fluids in the housing (100') out of respective fluid outlets (103', 103", 104', 104", 105', 105"), said fluid separator (100) exhibiting a spin-up device (400) arranged rotary inside the housing (100'), arranged to rotate by a permanent magnet motor (200) comprising numerous electromagnetic field producing means (202) connected to an AC power source (208), and numerous permanent magnets (404, 405) distributed along the periphery of the rotary spin-up device (400), wherein the numerous permanent magnets (404, 405) being formed by numerous permanent north pole magnets (405) and south pole magnets (404) arranged in an alternating pattern along the periphery, **characterized in that**
the spin-up device (400) is shaft-less and is arranged adjacent to the first end of the housing (100'), said shaft-less spin-up device (400) comprising a rotary annular frame (402) provided with numerous radially extending vanes (401),
**in that** the permanent magnets (404, 405) are distributed along the outer periphery of the rotary frame (402) and the electromagnetic field producing means (202) are electromagnets arranged along exterior periphery of the housing (100') and located radially outside the rotary annular frame (402), and
**in that** said at least one flow-restricting means (113, 115) is arranged downstream the respective fluid outlets (103', 103", 104', 104", 105', 105") and is formed by a respective fluid phase weir protruding with a distance from the inner wall of the housing (100') towards the center of the latter.

2. The separator of claim 1, wherein the vanes (401) are attached to the rotary annular frame (402) with a closed center piece (403) or a central bore (403') located centrally in the housing (101').

3. The separator of any one of claims 1 to 2, wherein the peripheral part of the rotary annular frame (402) is supported one or more bearings selected from the group consisting of an axial roller bearing (406), thrust bearings (205), a hydrodynamic bearing (203), a hydrostatic bearing (203) and a magnetic bearing (203).

4. The separator of claim 3, wherein the thrust bearing (205) is a ball bearing.

5. The separator of claim 3, wherein said bearings (203, 205, 406) are lubricated by process fluid or filled with an external fluid lubricant supplied in line (204) by pump (209).

6. The separator of any one of the preceding claims, wherein an insert pipe (106) is connected to the light phase outlet (102) and extending along the longitudinal axis (L) of housing (100') a distance upstream the separator (100), serving as a weir between light phase (301) and heavier fluid phase (302), whereby the flow-restricting means inside housing (100') closest to the light phase outlet (102) can be omitted.

7. The separator of any one of the preceding claims, wherein said fluid outlet for the respective phases is provided in the form of a hollow peripheral casing (120) arranged extending in the periphery of the housing (100') adjacent to the second end of the housing (100'), wherein a peripheral opening (121) is formed in at least a part of the wall of the separator housing (100'), thus establishing flow connection between the internal of the separator housing (100') and the internal of the peripheral casing (120), and wherein at least one fluid outlet (103) is formed in the outer surface of the peripheral casing (120).

8. The separator of any one of the preceding claims, wherein the separator is connected to a controller arranged to vary the frequency applied to electromagnetic field producing means (202) on the static frame (201) and hence control the rotational speed (rpm) of the shaft-less spin-up device (400) as a function of multi-phase composition and flow rate.

9. Use of a separator according to any one of the claims claim 1-8 for separating sludge from municipal waste water plants and handling of oil spill onboard an oil recovery vessel.

10. The use according to claim 9 for separating solids from liquid floating in said liquid.

11. The use according to claim 10, wherein the solids are plastic items floating in fresh water or sea.

## Patentansprüche

1. Mehrphasenfluidabscheider (100) zeigt ein längliches Gehäuse (100'), das ein erstes Ende und ein zweites Ende aufweist, und mit einem kreisförmigen Querschnitt und einer Längsachse (L), wobei das Gehäuse (100') einen Mehrphasenfluideinlass (101) an dem ersten Ende des Gehäuses (100'), zahlreiche Fluidauslässe (103', 103", 104', 104", 105', 105") nachgeschaltet dem ersten Ende, einen Leichtphasenauslass (102) in einer Mitte und mindestens ein Strömungsbegrenzungsmittel (113, 115), das innerhalb des Gehäuses (100') zum Leiten von abgeschiedenen Fluiden in dem Gehäuse (100') aus jeweiligen Fluidauslässen (103', 103", 104', 104", 105', 105") angeordnet ist, zeigt, wobei der Fluidabscheider (100) eine Drehbeschleunigungsvorrichtung (400), die innerhalb des Gehäuses (100') rotierend angeordnet ist, die angeordnet ist, um durch einen Permanentmagnetmotor (200) zu rotieren, umfassend zahlreiche Elektromagnetfelderzeugungsmittel (202), die mit einer Wechselstromquelle (208) verbunden sind, und zahlreiche Permanentmagnete (404, 405), die entlang des Umfangs der rotierenden Drehbeschleunigungsvorrichtung (400) angeordnet sind, zeigt, wobei die zahlreichen Permanentmagnete (404, 405) durch zahlreiche permanente Nordpolmagnete (405) und Südpolmagnete (404), die in einem abwechselnden Muster entlang des Umfangs angeordnet sind, ausgebildet sind, **dadurch gekennzeichnet, dass**
die Drehbeschleunigungsvorrichtung (400) wellenlos ist und angrenzend an das erste Ende des Gehäuses (100') angeordnet ist, die wellenlose Drehbeschleunigungsvorrichtung (400) umfassend einen rotierenden ringförmigen Rahmen (402), der mit zahlreichen sich radial erstreckenden Schaufeln (401) versehen ist, umfasst,
**dass** die Permanentmagnete (404, 405) entlang des Außenumfangs des rotierenden Rahmens (402) verteilt sind und die Elektromagnetfelderzeugungsmittel (202) Elektromagnete sind, die entlang des äußeren Umfangs des Gehäuses (100') angeordnet sind und außerhalb des rotierenden ringförmigen Rahmens (402) radial gelegen sind, und
**dass** das mindestens eine Strömungsbegrenzungsmittel (113, 115) nachgeschaltet den jeweiligen Fluidauslässen (103', 103", 104', 104", 105', 105") angeordnet ist und durch ein jeweiliges Fluidphasenwehr, das mit einem Abstand von der Innenwand des Gehäuses (100') zu der Mitte des letzteren hin vorsteht, ausgebildet ist.

2. Abscheider nach Anspruch 1, wobei die Schaufeln (401) mit einem geschlossenen Mittelstück (403) oder einer mittigen Bohrung (403'), die in dem Gehäuse (101') mittig gelegen sind, an dem rotierenden ringförmigen Rahmen (402) befestigt sind.

3. Abscheider nach einem der Ansprüche 1 bis 2, wobei der Umfangsteil des rotierenden ringförmigen Rahmens (402) an einem oder mehreren Lagern getragen wird, die aus der Gruppe ausgewählt sind, bestehend aus einem Axialwälzlager (406), Drucklagern (205), einem hydrodynamischen Lager (203), einem hydrostatischen Lager (203) und einem Magnetlager (203).

4. Abscheider nach Anspruch 3, wobei das Drucklager (205) ein Kugellager ist.

5. Abscheider nach Anspruch 3, wobei die Lager (203, 205, 406) durch Prozessfluid geschmiert oder mit einem äußerlichen Fluidschmiermittel gefüllt sind, das in Leitung (204) durch Pumpe (209) zugeführt wird.

6. Abscheider nach einem der vorstehenden Ansprüche, wobei ein Einsatzrohr (106) mit dem Leichtphasenauslass (102) verbunden ist und sich entlang der Längsachse (L) des Gehäuses (100') einen Abstand vorgeschaltet dem Abscheider (100) erstreckt, der als ein Wehr zwischen Leichtphase (301) und schwererer Fluidphase (302) dient, wodurch die Strömungsbegrenzungsmittel innerhalb des Gehäuses (100'), die dem Leichtphasenauslass (102) am nächsten sind, weggelassen werden können.

7. Abscheider nach einem der vorstehenden Ansprüche, wobei der Fluidauslass für die jeweiligen Phasen in der Ausbildung einer hohlen Umfangshülle (120), die sich in dem Umfang des Gehäuses (100') angrenzend an das zweite Ende des Gehäuses (100') erstreckt, bereitgestellt ist, wobei eine Umfangsöffnung (121) in mindestens einem Teil der Wand des Abscheidergehäuses (100') ausgebildet ist, wobei so eine Strömungsverbindung zwischen dem Inneren des Abscheidergehäuses (100') und dem Inneren der Umfangshülle (120) hergestellt wird und wobei mindestens ein Fluidauslass (103) in der Außenoberfläche der Umfangshülle (120) ausgebildet ist.

8. Abscheider nach einem der vorstehenden Ansprüche, wobei der Abscheider mit einer Steuerung verbunden ist, die angeordnet ist, um die Frequenz, die auf Elektromagnetfelderzeugungsmittel (202) an dem statischen Rahmen (201) angewendet wird, zu variieren und somit die Rotationsgeschwindigkeit (U/min) der wellenlosen Drehbeschleunigungsvorrichtung (400) in Abhängigkeit von Mehrphasenzusammensetzung und Strömungsrate zu steuern.

9. Verwendung eines Abscheiders nach einem der Ansprüche 1 bis 8 zum Abscheiden von Schlamm von kommunalen Abwasseranlagen und Handhaben einer Ölverschmutzung an Bord eines Ölrückgewinnungsschiffs.

10. Verwendung nach Anspruch 9 zum Abscheiden von Feststoffen aus Flüssigkeit, die in der Flüssigkeit schwebt.

11. Verwendung nach Anspruch 10, wobei die Feststoffe Kunststoffartikel, die in frischem Wasser oder einem Meer schwimmen, sind.

## Revendications

1. Séparateur de fluide polyphasique (100) présentant un boîtier (100') allongé ayant une première extrémité et une seconde extrémité, et avec une section transversale circulaire et un axe longitudinal (L), dans lequel le boîtier (100') présente une entrée de fluide polyphasique (101) au niveau de la première extrémité du boîtier (100'), de nombreuses sorties de fluide (103', 103", 104', 104", 105', 105") en aval de la première extrémité, une sortie de phase légère (102) au centre, et au moins un moyen de restriction d'écoulement (113, 115) agencé à l'intérieur du boîtier (100') de façon à guider des fluides séparés dans le boîtier (100') hors des sorties de fluide (103', 103", 104', 104", 105', 105") respectives, ledit séparateur de fluide (100) présentant un dispositif d'entraînement en rotation (400) agencé de manière rotative à l'intérieur du boîtier (100'), agencé de façon à tourner par un moteur à aimant permanent (200) comprenant de nombreux moyens producteurs de champ électromagnétique (202) connectés à une source d'alimentation CA (208), et de nombreux aimants permanents (404, 405) répartis le long de la périphérie du dispositif d'entraînement en rotation (400), dans lequel les nombreux aimants permanents (404, 405) sont formés par de nombreux aimants permanents à pôle nord (405) et aimants permanents à pôle sud (404) agencés selon un motif alterné le long de la périphérie, **caractérisé en ce que**
le dispositif d'entraînement en rotation (400) est sans arbre et est agencé adjacente à la première extrémité du boîtier (100'), ledit dispositif d'entraînement en rotation sans arbre (400) comprenant un cadre annulaire rotatif (402) pourvu de nombreuses aubes (401) s'étendant radialement,
**en ce que** les aimants permanents (404, 405) sont répartis le long de la périphérie extérieure du cadre rotatif (402) et les moyens producteurs de champ électromagnétique (202) sont des électro-aimants agencés le long de la périphérie extérieure du boîtier (100') et situés radialement à l'extérieur du cadre annulaire rotatif (402), et
**en ce que** ledit au moins un moyen de restriction d'écoulement (113, 115) est agencé en aval des sorties de fluide (103', 103", 104', 104", 105', 105") respectives et est formé par un déversoir de phase fluide respectif faisant saillie à une certaine distance de la paroi intérieure du boîtier (100') vers le centre de ce dernier.

2. Séparateur selon la revendication 1, dans lequel les aubes (401) sont fixées au cadre annulaire rotatif (402) à l'aide d'une pièce centrale fermée (403) ou un alésage central (403') situé de manière centrale dans le boîtier (101').

3. Séparateur selon l'une quelconque des revendications 1 à 2, dans lequel la partie périphérique du cadre annulaire rotatif (402) est supportée par un ou plusieurs roulements sélectionnés dans le groupe constitué d'un roulement à rouleaux axial (406), de roulements de butée (205), d'un roulement hydrodynamique (203), d'un roulement hydrostatique (203) et d'un roulement magnétique (203).

4. Séparateur selon la revendication 3, dans lequel le roulement de butée (205) est un roulement à billes.

5. Séparateur selon la revendication 3, dans lequel lesdits roulements (203, 205, 406) sont lubrifiés par un fluide de traitement ou remplis d'un lubrifiant fluide externe fourni dans une ligne (204) par une pompe (209).

6. Séparateur selon l'une quelconque des revendications précédentes, dans lequel un tuyau d'insertion (106) est relié à la sortie de phase légère (102) et s'étend le long de l'axe longitudinal (L) du boîtier (100') à une distance en amont du séparateur (100), servant de déversoir entre une phase légère (301) et une phase fluide plus lourde (302), par lequel le moyen de restriction d'écoulement à l'intérieur du boîtier (100') le plus proche de la sortie de phase légère (102) peut être omis.

7. Séparateur selon l'une quelconque des revendications précédentes, dans lequel ladite sortie de fluide pour les phases respectives est prévue sous la forme d'une enveloppe périphérique (120) creuse agencée de façon à s'étendre dans la périphérie du boîtier (100') adjacente à la seconde extrémité du boîtier (100'), dans lequel une ouverture périphérique (121) est formée dans au moins une partie de la paroi du boîtier (100') du séparateur, établissant ainsi une liaison d'écoulement entre l'intérieur du boîtier (100') du séparateur et l'intérieur de l'enveloppe périphérique (120), et au moins une sortie de fluide (103) est formée dans la surface extérieure de l'enveloppe périphérique (120).

8. Séparateur selon l'une quelconque des revendications précédentes, dans lequel le séparateur est relié à un dispositif de commande agencé de façon à faire varier la fréquence appliquée aux moyens producteurs de champ électromagnétique (202) sur le cadre statique (201) et donc à commander la vitesse de rotation (tr/min) du dispositif d'entraînement en rotation (400) sans arbre en fonction d'une composition polyphasique et d'un débit.

9. Utilisation d'un séparateur selon l'une quelconque des revendications 1 à 8 dans la séparation de boues des stations d'épuration municipales et le traitement de déversements d'hydrocarbures à bord d'un navire de récupération d'hydrocarbures.

10. Utilisation selon la revendication 9 dans la séparation de solides du liquide flottant dans ledit liquide.

11. Utilisation selon la revendication 10, dans laquelle les solides sont des objets en plastique flottant dans l'eau douce ou l'eau de mer.
